# EUROPÄISCHE PATENTSCHRIFT

(11) **EP 4 012 171 B1**
(45) Veröffentlichungstag und Bekanntmachung des Hinweises auf die Patenterteilung: **19.10.2022**
(21) Anmeldenummer: 20212514.2
(22) Anmeldetag: 08.12.2020
(51) Int. Cl.: F03D 7/02

(54) **VERFAHREN ZUM VERSTELLEN MINDESTENS EINES ROTORBLATTS EINER WINDENERGIEANLAGE SOWIE SYSTEM UND WINDENERGIEANLAGE ZUM AUSFÜHREN DES VERFAHRENS**
METHOD FOR ADJUSTING AT LEAST ONE ROTOR BLADE OF A WIND TURBINE AND SYSTEM AND WIND TURBINE FOR CARRYING OUT THE METHOD
PROCÉDÉ DE RÉGLAGE D'AU MOINS UNE PALE DE ROTOR D'UNE ÉOLIENNE AINSI QUE SYSTÈME ET ÉOLIENNE DESTINÉS À LA MISE EN OEUVRE DU PROCÉDÉ

(43) Veröffentlichungstag der Anmeldung: 15.06.2022
(73) Patentinhaber: Wobben Properties GmbH, 26607 Aurich (DE)
(72) Erfinder: SCHAPER, Ulf, 27254 Staffhorst (DE); WERNICKE, Lukas, 24118 Kiel (DE); WEGNER, Kai-Uwe, 26409 Wittmund (DE)
(74) Vertreter: Eisenführ Speiser

(56) Entgegenhaltungen:
- WO-A1-2015/014366
- DE-A1-102006 051 352
- DE-A1-102008 012 956
- DE-A1-102016 125 045

## Beschreibung

Die Erfindung betrifft ein Verfahren zum Verstellen eines Rotorblatts einer Windenergieanlage sowie ein System und eine Windenergieanlage, die eingerichtet sind, das Verfahren auszuführen.

Aus dem Stand der Technik sind Windenergieanlagen bekannt, deren Rotorblätter fest mit einer Narbe verbunden sind, um so einen Rotor der Windenergieanlage zu bilden. Bei modernen Windenergieanlagen ist es demgegenüber jedoch mittlerweile üblich, dass sich die Rotorblätter um Ihre Längsachse drehen und sich somit Verstellen lassen. Hierdurch wird ein Blattanstellwinkel, der auch Pitchwinkel genannt werden kann, verstellt. Das Verstellen der Rotorblätter um ihre Längsachse wird auch als Pitchen der Rotorblätter bezeichnet.

Durch Pitchen wird der Wirkungsgrad einer Windenergieanlage optimiert, da eine Leistung der Windenergieanlage an wechselnde Windgeschwindigkeiten angepasst werden kann. Über einen vordefinierten Windgeschwindigkeitsbereich kann so eine Windenergieanlage mit konstanter Nennleistung betrieben werden. Erst oberhalb einer Nennwindgeschwindigkeit werden die Rotorblätter, also deren Pitchwinkel, dann weiter verstellt, um die Leistung und die Belastung der Windenergieanlage zu begrenzen. Insbesondere bei sehr hohen Windgeschwindigkeiten werden die Rotorblätter komplett in eine Fahnenstellung gedreht, wodurch der Auftrieb abbricht und der Rotor im Wesentlichen zum Stillstand kommt. Hierdurch werden Beschädigungen vermieden.

Insbesondere bei sich plötzlich ändernden Windgeschwindigkeiten sind daher hohe Verfahrgeschwindigkeiten zur Änderung des Blattanstellwinkels, also des Pitchwinkels, nötig, um möglichst schnell eine steigende Belastung der Windenergieanlage abzuwenden. Bei diesen hohen Verfahrgeschwindigkeiten und insbesondere bei der Beschleunigung des Rotorblatts zum Erreichen dieser Verfahrgeschwindigkeiten wird eine sehr hohe Leistung von den Verstellantrieben, die auch Pitchantriebe genannt werden, aufgenommen.

Da die Verstellantriebe eine vergleichsweise hohe Leistungsaufnahme aufweisen, müssen Komponenten der Energieversorgung einer Windenergieanlage für den Betrieb im Wesentlichen so ausgelegt werden, dass diese ausreichende Leistung für gewünschte Verstellvorgänge liefern können. Dieser Auslegung der Energieversorgung sind jedoch Grenzen gesetzt, da bei der Dimensionierung zwar Extremlastsituationen durch schnelle Reaktion entgegengewirkt werden müssen aber die Kosten für eine entsprechende Dimensionierung nicht die Wirtschaftlichkeit der Windenergieanlage in Frage stellen dürfen. Das Dokument DE102008012956 A1 beschreibt zum Beispiel eine Windenergieanlage, wobei das Rotorblatt um eine Längsachse verdreht wird, wobei die Verdrehung mit einer vorgebbaren Blattwinkelverstellrate geschieht und wobei die Blattwinkelverstellrate durch einen vorgebbaren Blattwinkelverstellratengrenzwert begrenzt wird.

Aufgabe der vorliegenden Erfindung ist es daher, den Problemen des Stands der Technik zu begegnen. Insbesondere soll eine Möglichkeit gefunden werden, um eine möglichst schnelle Verstellung von Rotorblättern, insbesondere in Extremlastsituationen, mit einer wirtschaftlich vertretbaren Energieversorgungseinrichtung sicherzustellen. Jedenfalls soll eine Alternative zum Stand der Technik gefunden werden.

Die Erfindung betrifft hierzu ein Verfahren nach Anspruch 1.

Demnach wird ein Verfahren zum Verstellen mindestens eines Rotorblatts einer Windenergieanlage vorgeschlagen. Gemäß dem Verfahren wird zunächst ein Befehl zum Verstellen des Rotorblatts mit einer Verstellgeschwindigkeit erhalten oder empfangen. Das Verstellen des Rotorblatts betrifft ein Verstellen des Anstellwinkels, der auch Pitchwinkel genannt wird, des Rotorblatts. Demnach betrifft das Verstellen des Rotorblatts das Drehen des Rotorblatts um seine Längsachse. Die Verstellgeschwindigkeit entspricht hierbei einer Winkelgeschwindigkeit, die auch Rotationsgeschwindigkeit oder Drehgeschwindigkeit genannt werden kann.

Der Befehl zum Verstellen eines Rotorblatts wird beispielsweise in einer Steuerung oder einem Modul einer Steuerung einer Windenergieanlage, nämlich einer Windenergieanlagensteuerung, erzeugt, und basiert auf einem Ereignis, wie beispielsweise einer Änderung der Windgeschwindigkeit oder Windrichtung, die auf das Rotorblatt wirkt. Ein weiteres Modul der Steuerung oder eine weitere Steuerung, beispielsweise eine Pitchsteuerung, der Windenergieanlage erhält dann vorzugsweise diesen Befehl.

In einem nächsten Schritt wird ein aktuelles Trägheitsmoment des Rotorblatts ermittelt. Das ermittelnde Trägheitsmoment bezeichnet das Trägheitsmoment, das bei Änderung des Pitchwinkels des Rotorblatts aus der aktuellen Stellung, also dem aktuellen Pitchwinkel, erwartet wird. Ferner wird das Rotorblatt bis zum Erreichen der Verstellgeschwindigkeit beschleunigt. Die Beschleunigung wird hierbei in Abhängigkeit des ermittelten Trägheitsmoments begrenzt.

Es wird demnach vorzugsweise ein Beschleunigungsschwellenwert aus dem aktuellen Trägheitsmoment ermittelt und die Beschleunigung solange erhöht, solange diese unter dem Beschleunigungsschwellenwert liegt.

Demnach wird also bei der Beschleunigung des Rotorblatts das Trägheitsmoment des Rotorblatts berücksichtigt. Hierbei liegt der Erfindung die Erkenntnis zu Grunde, dass für eine Verstellung, also ein Pitchen, eines Rotorblatts aus einer Ruheposition bis auf eine Verstellgeschwindigkeit zur Beschleunigung je mehr Leistung benötigt wird, desto höher das aktuelle Trägheitsmoment ist. Weiter liegt der Erfindung die Erkenntnis zu Grunde, dass das Trägheitsmoment eines Rotorblatts einer Windenergieanlage in Abhängigkeit verschiedener Bedingungen variiert und nicht konstant ist. Dies wird ausgenutzt, indem eine Begrenzung einer Beschleunigung in Abhängigkeit eines zuvor erkannten aktuellen Trägheitsmoments, das maßgeblich für eine Energieaufnahme eines Verstellantriebs bei einer Beschleunigung ist, variiert wird.

Es kann somit, ausgehend von einer maximal verfügbaren Leistung zum Verstellen des Rotorblatts, unter Berücksichtigung des aktuellen Trägheitsmoments, die größtmögliche Beschleunigung gewählt werden. Hierdurch wird sichergestellt, dass, insbesondere bei Extremlasten, durch eine maximal mögliche Beschleunigung, ohne eine gegebene Auslegung einer Energieversorgung überzubelasten, schnell ein sicherer Zustand der Windenergieanlage erreicht werden kann. Hierbei wird in Kauf genommen, dass gelegentlich Situationen auftreten können, bei denen kurzzeitig eine höhere Belastung der Windenergieanlage auftritt. Dies ist der Fall, wenn auf Grund eines hohen Trägheitsmoments nur eine vergleichsweise langsame Beschleunigung möglich ist, so dass Windkräfte länger auf die Windenergieanlage einwirken können. Dafür ist aber eine Überdimensionierung einer Energieversorgung oder der Komponenten zur Energieversorgung vermeidbar.

Gemäß einer ersten Ausführungsform wird eine aktuelle Auslenkung des Rotorblatts ermittelt und das aktuelle Trägheitsmoment in Abhängigkeit der ermittelten aktuellen Auslenkung des Rotorblatts bestimmt. Hierbei wird die Erkenntnis zu Grunde gelegt, dass ein Trägheitsmoment eines Rotorblatts im Wesentlichen von dessen Auslenkung abhängig ist. Die Auslenkung kann auch als Durchbiegung des Rotorblatts bezeichnet werden und beschreibt beispielsweise eine Verschiebung der Rotorblattspitze im aktuellen Zustand gegenüber einem Ruhezustand, bei dem vorzugsweise keine Windkraft auf das Rotorblatt wirkt. Im Falle eines stark ausgelenkten Rotorblatts wirken demnach Kräfte, beispielsweise im Anschlussbereich des Rotorblatts an die Rotornabe, die das Trägheitsmoment beeinflussen. Aus diesen Kräften resultiert im Wesentlichen, insbesondere im Vergleich zu anderen Anteilen, die vernachlässigbar sind, der größte Anteil an einem Trägheitsmoment des Rotorblatts, so dass allein durch Ermitteln der Auslenkung des Rotorblatts ausreichend genau auf ein aktuelles Trägheitsmoment geschlossen werden kann. Im Übrigen ist eine Auslenkung eines Rotorblatts vergleichsweise genau bestimmbar.

Gemäß einer weiteren Ausführungsform wird eine aktuelle Windgeschwindigkeit, vorzugsweise im Bereich des Rotorblatts oder der Windenergieanlage, an der das Rotorblatt angeordnet ist, ermittelt. Die Auslenkung oder das Trägheitsmoment des Rotorblatts wird in Abhängigkeit der ermittelten Windgeschwindigkeit ermittelt. Hierbei wird die Erkenntnis ausgenutzt, dass eine Auslenkung des Rotorblatts im Wesentlichen abhängig von der aktuellen Windgeschwindigkeit ist. Insbesondere, wenn zusätzlich ein aktueller Anstellwinkel und beispielsweise eine aktuelle Drehzahl des Rotors, an dem das Rotorblatt angeordnet ist, bekannt sind. Insbesondere unter Berücksichtigung der Windgeschwindigkeit und vorzugsweise unter Berücksichtigung der Drehzahl des Rotors und/oder des aktuellen Anstellwinkels des Rotorblatts kann so die Auslenkung ohne eine unmittelbare Messung der Auslenkung bestimmt werden. Auf zusätzliche Hardware zum Bestimmen der Auslenkung kann so verzichtet werden.

Gemäß einer weiteren Ausführungsform wird die aktuelle Windgeschwindigkeit ermittelt, indem die aktuelle Windgeschwindigkeit, insbesondere mit einem Anemometer oder einem Lidarsystem, das auch als Wind-Lidar bezeichnet wird, gemessen wird. Alternativ wird ein kontinuierlich bestimmter Windgeschwindigkeitsmittelwert abgerufen und als aktuelle Windgeschwindigkeit zur Bestimmung der Auslenkung verwendet. Der kontinuierlich bestimmte Windgeschwindigkeitsmittelwert ist beispielsweise ein 3-Sekunden-Mittelwert oder ein 10-Sekunden-Mittelwert. 3-Sekunden-Mittelwerte oder 10-Sekunden-Mittelwerte sind für unterschiedliche Steuerungs- oder Regelungsaufgaben ohnehin durch deren kontinuierliche Bestimmung in einer Steuerung einer Windenergieanlage vorhanden und können direkt abgerufen werden. Wenn hier und im Weiteren eine Steuerung genannt wird, so ist die Steuerung nicht auf Steuerungsaufgaben begrenzt sondern dient je nach Anforderung zum Steuern und zum Regeln.

Gemäß einer weiteren Ausführungsform wird das aktuelle Trägheitsmoment oder die aktuelle Auslenkung in Abhängigkeit des Blattanstellwinkels des Rotorblatts und/oder einer Drehzahl des Rotors, zu dem das Rotorblatt gehört, und/oder einer aktuellen elektrischen Leistung, die mit dem Windenergieanlagengenerator der Windenergieanlage, dem das Rotorblatt zugeordnet ist, erzeugt wird, zur Bestimmung des Trägheitsmoments oder der Auslenkung verwendet. Sogar ohne Betrachtung einer Windgeschwindigkeit kann durch Bestimmung des Pitchwinkels, der Drehzahl und der aktuellen Leistung indirekt auf eine aktuelle Windgeschwindigkeit, somit wiederum auf das Trägheitsmoment und damit auf eine Begrenzung der Beschleunigung geschlossen werden.

Gemäß einer weiteren Ausführungsform wird die aktuelle Auslenkung des Rotorblatts mit Sensoren, insbesondere Dehnungsmessstreifen oder einem optischen Sensorsystem am Rotorblatt ermittelt. Gegenüber einer oder einer ausschließlich indirekten Bestimmung der Auslenkung und somit des Trägheitsmoments sind demnach Sensoren vorgesehen, um eine Auslenkung des Rotorblatts unmittelbar zu messen. Vorzugsweise sind diese Sensoren Dehnungsmessstreifen oder entsprechen einem optischen Sensorsystem. Ein oder mehrere Dehnungsmessstreifen lassen sich einfach am oder im Rotorblatt befestigen und geben unmittelbar Aufschluss über eine Biegung oder Durchbiegung des Rotorblatts, um so auch die Auslenkung zu bestimmen.

Ein optisches Sensorsystem, das als Lasersensor ausgeführt ist, umfasst beispielsweise einen Laser, der an einem Längsende des Rotorblatts, beispielsweise der Rotorblattnarbe angeordnet ist und dessen Licht über Spiegel entlang der Längsachse des Rotorblatts bis zu einem Detektor am gleichen oder gegenüberliegenden Ende, an dem auch der Laser selbst angeordnet ist, geführt wird. Eine Verschiebung des Strahls durch Bewegung der Spiegel führt zu einer detektierbaren Änderung des Auftrittspunkts des Lasers am Sensor, so dass hierdurch auf eine Biegung des Rotorblatts und damit auf eine entsprechende Auslenkung geschlossen werden kann. Eine Auslenkung des Rotorblatts ist so besonders genau bestimmbar, so das letztendlich auch das aktuelle Trägheitsmoment sehr genau bestimmbar ist.

Weiter kann das optische Sensorsystem vorzugsweise auch ein Kamerasystem sein, bei dem von einer Lichtquelle, beispielsweise einer Infrarotlichtquelle, ein Licht entlang der Längsachse des Rotorblatts durch das Rotorblatt ausgesendet wird. Reflektoren im Rotorblatt reflektieren das Licht, wobei das reflektierte Licht von einer Kamera aufgenommen wird. Die Reflektoren sind fest an verschiedenen Positionen im Rotorblatt angeordnet, sodass eine Auslenkung zu relativen Verschiebungen der Reflektoren zueinander führt, die von der Kamera bestimmt werden können.

Gemäß einer weiteren Ausführungsform umfasst der Befehl zum Verstellen mindestens einen Befehl zum Verstellen von mindestens zwei Rotorblättern. Demnach wird mit dem Befehl gefordert, dass zwei Rotorblätter mit der im Befehl enthaltenen Verstellgeschwindigkeit verstellt werden. Gemäß der Ausführungsform wird ein erstes Rotorblatt von zwei Rotorblättern eines Rotors beschleunigt und nach Ablauf einer vorbestimmten Zeitdauer oder nach Eintreten eines vordefinierten Ereignisses ein zweites Rotorblatt der zwei Rotorblätter beschleunigt. Die vorbestimmte Zeitdauer beträgt vorzugsweise weniger als 250 Millisekunden oder weniger als 100 Millisekunden und besonders bevorzugt mehr als 50 Millisekunden. Ein vordefiniertes Ereignis ist beispielsweise das Erreichen der Verstellgeschwindigkeit des ersten Rotorblatts oder das Erreichen einer vorgegebenen Beschleunigung des ersten Rotorblatts.

Dieser Ausführungsform wird die Erkenntnis zu Grunde gelegt, dass gerade zu Beginn einer Beschleunigung zur Veränderung des Anstellwinkels des Rotorblatts aus einer Ruhestellung besonders hohe Leistung von den für die Verstellung eingesetzten Motoren aufgenommen wird. Durch versetztes oder kaskadiertes Anfahren der Rotorblätter, auch mit nur einem sehr geringen Zeitversatz, werden demnach hohen Leistungsspitzen einer Gesamtleistung zum Verstellen mehrerer Rotorblätter vermieden. Eine vergleichsweise höhere Beschleunigung eines einzelnen Rotorblatts ist somit möglich.

Gemäß einer weiteren Ausführungsform umfasst der Befehl zum Verstellen einen Befehl zum Verstellen von mindestens zwei Rotorblättern. Demgemäß wird ein aktuelles erstes Trägheitsmoment für ein erstes Rotorblatt von zwei Rotorblättern und ein aktuelles zweites Trägheitsmoment für ein zweites Rotorblatt von den zwei Rotorblättern ermittelt. Die Beschleunigung des ersten Rotorblatts wird bis zum Erreichen der Verstellgeschwindigkeit in Abhängigkeit des ermittelten ersten Trägheitsmoments begrenzt und die Beschleunigung des zweiten Rotorblatts wird bis zum Erreichen der Verstellgeschwindigkeit in Abhängigkeit des ermittelten zweiten Trägheitsmoments begrenzt. Hierbei wird berücksichtigt, dass Trägheitsmomente neben der oben genannten Auslenkung oder Durchbiegung noch von anderen Faktoren abhängig sind. Dies ist beispielsweise eine Ausrichtung der Rotorblattlängsachse zu einer Bezugsebene der Windenergieanlage, beispielsweise einer senkrechten oder horizontalen Linie. Ein Rotorblatt hat beispielsweise bei einer "6-Uhr-Stellung" ein anderes Trägheitsmoment als bei einer "9-Uhr-Stellung". Dies wird hier berücksichtigt, indem Trägheitsmomente individuell für mehrere Rotorblätter jeweils bestimmt und die Beschleunigungen der jeweiligen Rotorblätter einzeln in Abhängigkeit ihres jeweiligen individuellen Trägheitsmoments begrenzt werden. Hierdurch wird ermöglicht, dass ein Rotorblatt, das beispielsweise ein geringeres Trägheitsmoment im Vergleich zu einem anderen Rotorblatt aufweist, auch entsprechend schneller beschleunigt wird. Lasten, insbesondere Extremlasten, auf die Windenergieanlage insgesamt können somit, auch wenn nur eines der Rotorblätter vergleichsweise schneller beschleunigt wird als eines oder mehrere der übrigen Rotorblätter, noch schneller abgewendet werden.

Gemäß einer weiteren Ausführungsform ist eine Zuordnung hinterlegt, die einer aktuellen Auslenkung des Rotorblatts oder eines Zustands der Windenergieanlage ein Trägheitsmoment zuordnet. Die Zuordnung ist vorzugsweise in Form einer Tabelle oder eines Diagramms in einer Steuerung, insbesondere einer Steuerung zum Verstellen des Rotorblatts, hinterlegt. Die Zuordnung ist vorzugsweise anhand einer Simulation oder durch Versuchsreihen vorab ermittelt und dann in einem Speicher der Steuerung hinterlegt. Eine entweder mittelbar, beispielsweise durch die Windgeschwindigkeit, oder unmittelbar, beispielsweise durch Sensoren, gemessene Auslenkung ist somit leicht in ein resultierendes Trägheitsmoment überführbar. Vorzugsweise sind für jede Auslenkung mehrere Werte des Trägheitsmoments vorgesehen, um so in Versuchen oder Simulationen in Abhängigkeit weiterer Betriebsparameter unterschiedliche Trägheitsmomente abzubilden. In diesem Fall wird dank der Zuordnung beispielsweise ein Durchschnittswert oder ein aus der Simulation abgeleiteter Maximal- oder Minimalwert, vorzugsweise noch mit einem Offset oder dergleichen beaufschlagt, eines Trägheitsmoments einfach ermittelbar.

Gemäß einer weiteren Ausführungsform ist ein Maximalbeschleunigungswert festgelegt. Die Beschleunigung wird unabhängig von dem ermittelten Trägheitsmoment durch den Maximalbeschleunigungswert begrenzt. Die Beschleunigung überschreitet somit, selbst, wenn dies auf Grund des ermittelten Trägheitsmoments möglich wäre, nicht den vorgegebenen Maximalbeschleunigungswert. Somit können Beschleunigungen vermieden werden, die auf Grund vorherrschender, vergleichsweise geringer, Trägheitsmomente zu einem Verstellen der Rotorblätter mit einer Beschleunigung führen würden, die das Rotorblatt oder Verstellkomponenten, wie beispielsweise einen Verstellantrieb, beschädigen könnten.

Gemäß einer weiteren Ausführungsform umfasst der Befehl zum Verstellen einen Befehl zum Verstellen von genau drei Rotorblättern einer Windenergieanlage. Die Begrenzung der Beschleunigung für jedes der Rotorblätter ergibt sich gleich und ist das Ergebnis einer Berechnung. Ein Schwellenwert wird somit mit der Berechnung ermittelt. Die Berechnung umfasst eine Division, bei der ein Produkt aus einer Vorgabe einer vordefinierten maximalen Leistung und einem Wirkungsgrad durch die Summe der ermittelten Trägheitsmomente für alle drei Rotorblätter geteilt wird. Eine einfache Berechnung der Begrenzung der Beschleunigung ist somit anhand bekannter Parameter möglich.

Gemäß einerweiteren Ausführungsform wird vor dem Erhalten des Befehls zum Verstellen mindestens eines Rotorblatts eine Extremlastvermeidungsfunktion aktiviert. Das heißt, das Verfahren wird insbesondere dann durchgeführt, wenn eine Extremlastvermeidungsfunktion ausgeführt wird. Diese Extremlastvermeidungsfunktion kann beispielsweise eine Funktion sein, die von der Windenergieanlage im Falle plötzlich auftretender und erkannter Sturmböen oder Starkwindböen ausgeführt wird. Eine Extremlastvermeidungsfunktion dient, um einer Überlastung oder zumindest einer zu starken Belastung der Windenergieanlage, die zur Beschädigung oder zumindest zu vergleichsweise hoher Beanspruchung, die wiederum zu vergleichsweise starkem Verschleiß führt, entgegenzuwirken.

Gerade in den Fällen einer ausgelösten Extremlastvermeidungsfunktion ist eine hohe Verfahrgeschwindigkeit und im Zusammenhang damit eine hohe Beschleunigung der Rotorblätter nötig und es muss daher insbesondere in derartigen Fällen sichergestellt werden, dass eine bestehende Energieversorgung nicht überlastet wird.

Ferner betrifft die Erfindung ein System, das eingerichtet ist, das Verfahren gemäß einer der vorgenannten Ausführungsformen auszuführen. Außerdem betrifft die Erfindung eine Windenergieanlage mit dem System, mindestens einem Rotorblatt und einer Steuerung, die eingerichtet ist, das Verfahren gemäß einer der vorgenannten Ausführungsformen auszuführen. Die Windenergieanlage umfasst ferner eine Energieversorgung zur Versorgung mindestens eines Verstellantriebs des Rotorblatts. Die Steuerung ist angepasst, die Beschleunigung derart zu bestimmen, dass eine von der Energieversorgung bereitstellbare oder vordefinierte maximale Leistung nicht überschritten wird.

Weitere Ausführungsformen ergeben sich anhand der in den Figuren näher erläuterten Ausführungsbeispiele. Hierbei zeigt:
- Figur 1: eine Windenergieanlage,
- Figur 2: ein System zum Verstellen der Rotorblätter und
- Figur 3: die Schritte eines Ausführungsbeispiels des Verfahrens.

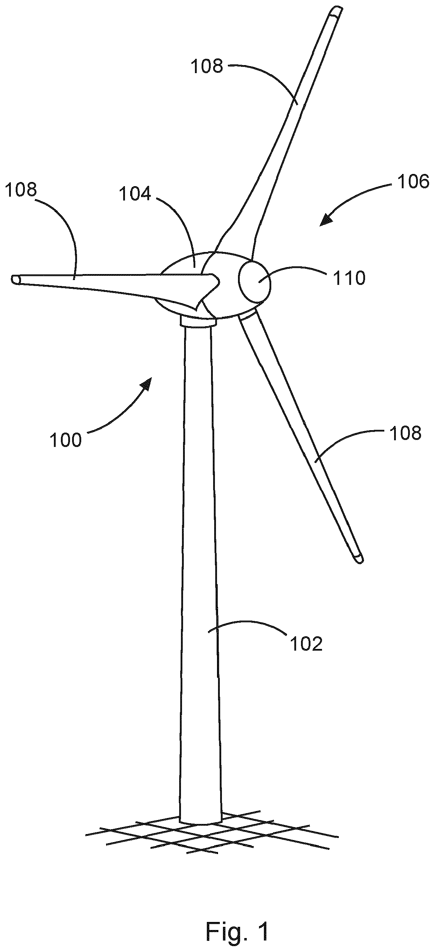

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110, der auch als Rotorblattnabe bezeichnet werden kann, vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108, die auch Rotorblattanstellwinkel oder kurz Anstellwinkel genannt werden können, können durch Pitchmotoren, die auch Verstellantriebe genannt werden können, an den Rotorblattwurzeln der jeweiligen Rotorblätter 108 verändert werden.

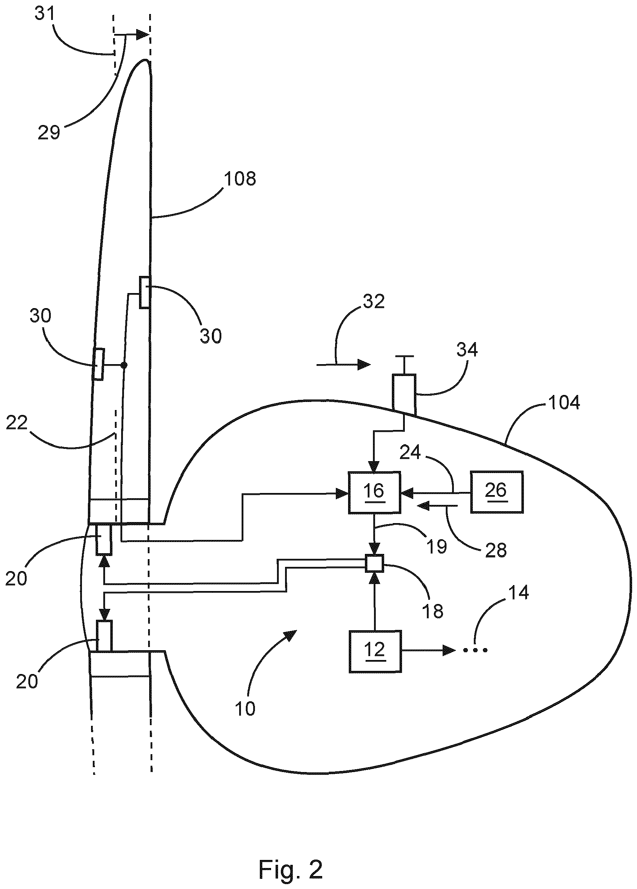

Figur 2 zeigt eine Gondel 104 einer Windenergieanlage in schematischer Darstellung mit einzelnen Komponenten eines Systems 10 gemäß einem Ausführungsbeispiel, um ein Ausführungsbeispiel des Verfahrens zum Verstellen mindestens eines Rotorblatts 108 einer Windenergieanlage 100 auszuführen.

In der Gondel 104 ist eine Energieversorgung 12 angeordnet, die nicht dargestellte, weitere Komponenten 14 der Windenergieanlage mit Energie versorgt. Weiterhin ist eine Steuerung 16 zum Verstellen der Rotorblätter dargestellt. Die Steuerung 16 kann auch Pitchsteuerung genannt werden. Die Steuerung 16 ist mit einer Leistungselektronik 18 verbunden, der Energie von der Energieversorgung zugeführt wird. Durch Ansteuern der Leistungselektronik 18 mit einem Ansteuersignal 19 werden entsprechend des Ansteuersignals 19 ein oder mehrere Verstellantriebe 20 mit Energie versorgt, um die ebenfalls in Figur 2 dargestellten Rotorblätter 108 um eine Längsachse 22 zu drehen, also deren Pitchwinkel zu verstellen. In Abhängigkeit des Ansteuersignals 19 wird beispielsweise, wenn eine geringe Beschleunigung oder Verstellgeschwindigkeit, also Drehgeschwindigkeit, des Rotorblatts 108 gewünscht ist, die Leistungsschaltung 18 so angesteuert, dass nur eine vergleichsweise geringe Energie aus der Energieversorgung 12 zu den Motoren 20 geleitet wird. Bei hohen gewünschten Beschleunigungen oder Verstellgeschwindigkeiten wird die Leistungselektronik 18 demgegenüber so angesteuert, dass vergleichsweise mehr Energie aus der Energieversorgung 12 zu den Motoren 20 geführt wird.

Die Steuerung 16 zum Steuern der Pitchmotoren 20 erhält hierzu einen Befehl 24 zum Verstellen der Rotorblätter 108 von einer Windenergieanlagensteuerung 26. Die Windenergieanlagensteuerung 26 ist mit einer Vielzahl weiterer Komponenten 14 verbunden, um Betriebszustände der Komponenten 14 mit der Windenergieanlagensteuerung 26 einzustellen, zu regeln und zu überwachen. Das Überwachen schließt außerdem ein Überwachen des Betriebszustands selbst sowie auch von Umwelteinflüssen auf die Windenergieanlage 100 ein.

Wird in Abhängigkeit eines aktuellen Betriebszustands und sich beispielsweise ändernder Umwelteinflüsse, wie beispielsweise auftretender starker Windböen, eine Extremlast detektiert, nämlich, dass eine Belastung der Windenergieanlage einen vermeidbaren Grad eines Verschleißes oder sogar eine drohende Beschädigung erreicht, so wird beispielsweise ein Befehl 24 an die Steuerung 16 zum Verstellen der Rotorblätter 108 übermittelt. In diesem Fall wird vorzugsweise auch eine gewünschte Verstellgeschwindigkeit 28 mit dem Befehl 24 vorgegeben, die beispielsweise zur Vermeidung einer Beschädigung oder eines hohen Verschleißes vergleichsweise groß gegenüber einer Verstellgeschwindigkeit 28 gewählt ist, die im normalen Betrieb der Windenergieanlage 100 gewünscht wird. In der Steuerung 16 zum Ansteuern der Pitchmotoren 20 wird dann ein aktuelles Trägheitsmoment des Rotorblatts 108 oder alle Rotorblätter 108 ermittelt. Da das Rotorblatt 108 im Wesentlichen von einer Auslenkung 29 aus einer Ruheposition 31, die auch als Durchbiegung des Rotorblatts 108 bezeichnet werden kann, abhängig ist, sind Dehnungsmessstreifen 30 im Rotorblatt 108 vorgesehen, mit denen sich unmittelbar eine Durchbiegung und somit eine Auslenkung 29 des Rotorblatts 108 detektieren lässt. Anhand der mit den Dehnungsmessstreifen 30 gemessenen Auslenkung 29 ermittelt die Steuerung 16 somit ein aktuelles Trägheitsmoment des Rotorblatts 108.

Alternativ oder zusätzlich kann auch eine Windgeschwindigkeit 32, die im Bereich eines Anemometers 34 vorherrscht, gemessen und als aktuelle Windgeschwindigkeit 33 bei der Ermittlung des Trägheitsmoments berücksichtigt werden. Die Steuerung 16 steuert dann die Leistungselektronik 18 in Abhängigkeit des ermittelten Trägheitsmoments und der Verstellgeschwindigkeit so an, dass das Rotorblatt 108 bis zum Erreichen der Verstellgeschwindigkeit beschleunigt wird, wobei die Beschleunigung unterhalb eines Schwellenwerts einer Beschleunigung bleibt, die in Abhängigkeit des Trägheitsmoments bestimmt wurde. Die Beschleunigung wird somit in Abhängigkeit des ermittelten Trägheitsmoments begrenzt. Hierdurch wird sichergestellt, dass die Energieversorgung 12 ausreichende Leistung zum Versorgen der Komponenten 14 bereitstellen kann, auch wenn für eine Beschleunigung der Pitchmotoren 20 Energie geliefert werden muss, da die Leistung für die Pitchmotoren 20 in geeigneter Weise begrenzt wird.

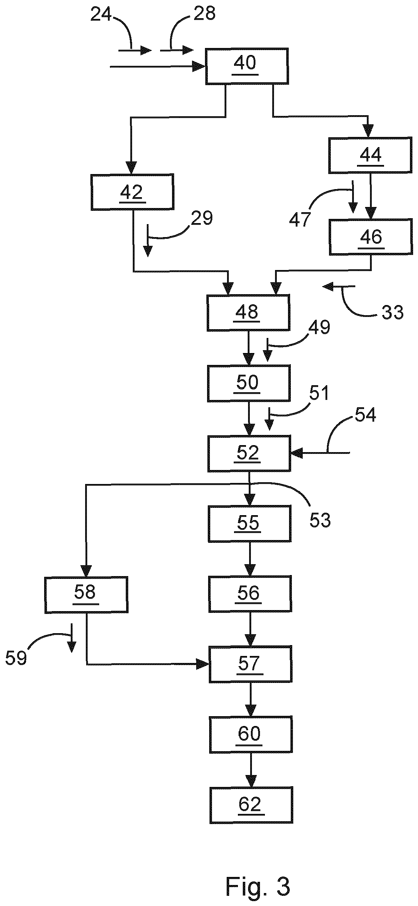

Figur 3 zeigt die Schritte des Verfahrens gemäß einem Ausführungsbeispiel zum Verstellen mindestens eines Rotorblatts einer Windenergieanlage. In einem Schritt 40 wird ein Befehl zum Verstellen des Rotorblatts 108 mit einer Verstellgeschwindigkeit 28 empfangen. Daraufhin wird in einem Schritt 42 eine Durchbiegung oder Auslenkung 29 des Rotorblatts 108 bestimmt. Alternativ wird im Schritt 46 eine aktuelle Windgeschwindigkeit 33 im Bereich der Windenergieanlage 100 oder des Rotorblatts 108 bestimmt. Dies kann wie in Figur 2 durch direktes Ablesen der Windgeschwindigkeit 33 aus einem Anemometer 34 erfolgen, wobei im vorliegenden Ausführungsbeispiel im Schritt 44 ein in einer Windenergieanlagensteuerung 26 hinterlegter 10-Sekunden-Mittelwert 47 abgerufen wird.

Weiter wird in einem Schritt 48 bei beiden Alternativen unterschiedlichen vorhergegangenen Schritten in einem Schritt 48 eine Drehzahl 49 des Rotors 106 der Windenergieanlage 100 bestimmt, und in einem Schritt 50 wird zusätzlich noch der Pitchwinkel 51 mindestens eines der Rotorblätter 108 bestimmt. Daraufhin wird aus allen erfassten Werten, nämlich entweder der Auslenkung 29, der Drehzahl 49 des Rotors 106 und dem Pitchwinkel 51 oder der Windgeschwindigkeit 33, der Drehzahl 49 und des Rotorblattwinkels 51 in einem Schritt 52 das Trägheitsmoment 53 des oder der Rotorblätter 108 bestimmt. Hierfür wird vorzugsweise eine Zuordnung 54 verwendet, anhand derer sich das Trägheitsmoment 53 aus den vorher ermittelten Werten ergibt. In einem Schritt 55 wird dann die Leistungselektronik 18 angesteuert so dass im Schritt 56 das oder die Rotorblätter 108 bis zum Erreichen der Verstellgeschwindigkeit mit den Pitchmotoren 20 beschleunigt werden. Im Schritt 57 wird unmittelbar nach dem Beginn der Beschleunigung geprüft, dass die Leistungselektronik 18 so angesteuert wird, dass eine Beschleunigung bis zum Erreichen der Verstellgeschwindigkeit 28 in Abhängigkeit des ermittelten Trägheitsmoments 53 begrenzt wird. Hierzu wird vorzugsweise parallel aus dem Trägheitsmoment 53 in einem Schritt 58 ein Schwellenwert 59 bestimmt, der von der Beschleunigung nicht überschritten werden darf.

Im Schritt 60 ist dann die vorgegebene Verstellgeschwindigkeit 28 erreicht, so dass eine Beschleunigung auf 0 reduziert wird, und das Rotorblatt 108 bis zum Erreichen einer ebenfalls mit dem Befehl vorgegebenen Position, nämlich einem Zielpitchwinkel, verstellt wird.

## Patentansprüche

1. Verfahren zum Verstellen mindestens eines Rotorblatts (108) einer Windenergieanlage (100) umfassend die Schritte:
- Erhalten eines Befehls (24) zum Verstellen des Rotorblatts (108) mit einer Verstellgeschwindigkeit (28),
- Ermitteln eines aktuellen Trägheitsmoments (53) des Rotorblatts (108),
- Beschleunigen des Rotorblatts (108) bis zum Erreichen der Verstellgeschwindigkeit (28), wobei die Beschleunigung bis zum Erreichen der Verstellgeschwindigkeit (28) in Abhängigkeit des ermittelten Trägheitsmoments (53) begrenzt wird.

2. Verfahren nach Anspruch 1, wobei eine aktuelle Auslenkung (29) des Rotorblatts (108) ermittelt wird und das aktuelle Trägheitsmoment (53) in Abhängigkeit der ermittelten aktuellen Auslenkung (29) des Rotorblatts (108) bestimmt wird.

3. Verfahren nach Anspruch 1 oder 2, wobei eine aktuelle Windgeschwindigkeit (33) ermittelt wird und die aktuelle Auslenkung (29) und/oder das aktuelle Trägheitsmoment (53) des Rotorblatts (108) in Abhängigkeit der ermittelten Windgeschwindigkeit (33) ermittelt wird.

4. Verfahren nach einem der vorhergehenden Ansprüche, wobei die aktuelle Windgeschwindigkeit (33) ermittelt wird, indem eine Windgeschwindigkeit (32), insbesondere mit einem Anemometer (34) oder einem Lidarsystem, gemessen wird oder ein kontinuierlich bestimmter Windgeschwindigkeitsmittelwert, insbesondere ein 3-Sekunden-Mittelwert oder ein 10-Sekunden-Mittelwert (47), abgerufen wird.

5. Verfahren nach einem der vorhergehenden Ansprüche, wobei das aktuelle Trägheitsmoment (53) oder die Auslenkung (29) in Abhängigkeit eines aktuellen Pitchwinkels (51) des Rotorblatts (108) und/oder einer aktuellen Drehzahl (49) eines Rotors, zu dem das Rotorblatt (108) gehört und/oder einer aktuellen elektrischen Leistung des Windenergieanlagengenerators der Windenergieanlage, dem das Rotorblatt (108) zugeordnet ist, ermittelt wird.

6. Verfahren nach einem der vorhergehenden Ansprüche, wobei die aktuelle Auslenkung (29) des Rotorblatts (108) mit Sensoren, insbesondere Dehnungsmessstreifen (30) oder einem optischen Sensorsystem, wie einem Lasersensorsystem oder einem Kamerasystem, am Rotorblatt (108) ermittelt wird.

7. Verfahren nach einem der vorhergehenden Ansprüche, wobei der Befehl (24) zum Verstellen von mindestens zwei Rotorblättern (108) erhalten wird, daraufhin ein erstes Rotorblatt (108) von zwei Rotorblättern (108) beschleunigt und nach Ablauf einer vorbestimmten Zeitdauer, die vorzugsweise weniger als 250 Millisekunden oder weniger als 100 Millisekunden beträgt, oder nach Eintreten eines vordefinierten Ereignisses ein zweites Rotorblatt (108) von den zwei Rotorblättern (108) beschleunigt wird.

8. Verfahren nach einem der vorhergehenden Ansprüche, wobei der Befehl zum Verstellen von mindestens zwei Rotorblättern (108) erhalten wird und ein aktuelles erstes Trägheitsmoment (53) für ein erstes Rotorblatt (108) von zwei Rotorblättern (108) und ein aktuelles zweites Trägheitsmoment (53) für ein zweites Rotorblatt (108) von den zwei Rotorblättern (108) ermittelt wird und die Beschleunigung des ersten Rotorblatts (108) bis zum Erreichen der Verstellgeschwindigkeit (28) in Abhängigkeit des ermittelten ersten Trägheitsmoments (53) begrenzt und die Beschleunigung des zweiten Rotorblatts (108) bis zum Erreichen der Verstellgeschwindigkeit (28) in Abhängigkeit des ermittelten zweiten Trägheitsmoments (53) begrenzt wird.

9. Verfahren nach einem der vorhergehenden Ansprüche, wobei zum Ermitteln des Trägheitsmoments (53), eine Zuordnung, insbesondere als Tabelle oder Diagramm, hinterlegt ist, wobei in der Zuordnung jeder Auslenkung oder jedem von mehreren Zuständen der Windenergieanlage (100) mindestens ein Trägheitsmoment (53) zugeordnet ist, wobei die Zuordnung insbesondere anhand einer Simulation oder durch Versuchsreihen vorab ermittelt und in einem Speicher hinterlegt ist.

10. Verfahren nach einem der vorhergehenden Ansprüche, wobei ein Maximalbeschleunigungswert festgelegt ist und die Beschleunigung des Rotorblatts (108) derart erfolgt, dass unabhängig vom ermittelten Trägheitsmoment (53) der Maximalbeschleunigungswert nicht überschritten wird.

11. Verfahren nach einem der vorhergehenden Ansprüche, wobei der Befehl zum Verstellen von genau drei Rotorblättern (108) einer Windenergieanlage (100) erhalten wird und sich ein Schwellenwert für die Begrenzung der Beschleunigungen für jedes der Rotorblätter (108) jeweils gleich ergibt, als Ergebnis aus einer Division eines Produkts aus einer Vorgabe einer vordefinierten maximalen Leistung und einem Wirkungsgrad, der für die Verstellung verwendeten Pitchmotoren (20), durch die Summe der ermittelten Trägheitsmomente (53) für alle drei Rotorblätter (108).

12. Verfahren nach einem der vorhergehenden Ansprüche, wobei vor dem Erhalten des Befehls (32) zum Verstellen mindestens eines Rotorblatts (108) eine Extremlastvermeidungsfunktion durch eine Windenergieanlagensteuerung (26) aktiviert wird.

13. System, das eingerichtet ist, das Verfahren nach einem der vorhergehenden Ansprüche auszuführen und das Mittel zum:
- Erhalten eines Befehls (24) zum Verstellen des Rotorblatts (108) mit einer Verstellgeschwindigkeit (28),
- Ermitteln eines aktuellen Trägheitsmoments (53) des Rotorblatts (108), und
- Beschleunigen des Rotorblatts (108) bis zum Erreichen der Verstellgeschwindigkeit (28), wobei die Beschleunigung bis zum Erreichen der Verstellgeschwindigkeit (28) in Abhängigkeit des ermittelten Trägheitsmoments (53) begrenzt wird,
aufweist.

14. Windenergieanlage (100) mit einem System nach Anspruch 13 und mindestens einem Rotorblatt (108) und einer Steuerung (16), wobei die Windenergieanlage (100) eine Energieversorgung (12) zur Versorgung mindestens eines Pitchantriebs (20) des Rotorblatts (108) aufweist und die Steuerung insbesondere angepasst ist, die Beschleunigung derart zu bestimmen, dass eine von der Energieversorgung (12) bereitstellbare oder vordefinierte maximale Leistung nicht überschritten wird.

## Claims

1. A method of adjusting at least one rotor blade (108) of a wind turbine (100) including the steps:
- receiving a command (24) for adjustment of the rotor blade (108) at an adjusting speed (28),
- ascertaining a current moment of inertia (53) of the rotor blade (108), and
- accelerating the rotor blade (108) until reaching the adjustment speed (28), wherein the acceleration until reaching the adjustment speed (28) is limited in dependence on the ascertained moment of inertia (53).

2. A method as claimed in claim 1 wherein a current deflection (29) of the rotor blade (108) is ascertained and the current moment of inertia (53) is determined in dependence on the ascertained current deflection (29) of the rotor blade (108).

3. A method as claimed in claim 1 or claim 2 wherein a current wind speed (33) is ascertained and the current deflection (29) and/or the current moment of inertia (53) of the rotor blade (108) is ascertained in dependence on the ascertained wind speed (33).

4. A method as claimed in one of the preceding claims wherein the current wind speed (33) is ascertained by a wind speed (32) being measured in particular with an anemometer (34) or a lidar system or by a continuously determined wind speed mean value, in particular a 3-second mean value or a 10-second mean value (47), being retrived.

5. A method as claimed in one of the preceding claims wherein the current moment of inertia (53) or the deflection (29) is ascertained in dependence on a current pitch angle (51) of the rotor blade (108) and/or a current rotary speed (49) of a rotor to which the rotor blade (108) belongs and/or a current electrical power of the wind turbine generator of the wind turbine with which the rotor blade (108) is associated.

6. A method as claimed in one of the preceding claims wherein the current deflection (29) of the rotor blade (108) is ascertained with sensors, in particular strain gauges (30) or an optical sensor system like a laser sensor system or a camera system on the rotor blade (108).

7. A method as claimed in one of the preceding claims wherein the command (24) for adjustment of at least two rotor blades (108) is received, thereupon a first rotor blade (108) of two rotor blades (108) is accelerated and after the expiry of a predetermined period of time which is preferably less than 250 milliseconds or less than 100 milliseconds or after the occurrence of a predefined event a second rotor blade (108) of the two rotor blades (108) is accelerated.

8. A method as claimed in one of the preceding claims wherein the command for adjustment of at least two rotor blades (108) is received and a current first moment of inertia (53) for a first rotor blade (108) of two rotor blades (108) and a current second moment of inertia (53) for a second rotor blade (108) of the two rotor blades (108) is ascertained and the acceleration of the first rotor blade (108) until reaching the adjustment speed (28) is limited in dependence on the ascertained first moment of inertia (53) and the acceleration of the second rotor blade (108) until reaching the adjusting speed (28) is limited in dependence on the ascertained second moment of inertia (53).

9. A method as claimed in one of the preceding claims wherein to ascertain the moment of inertia (53) an association, in particular in the form of a table or diagram, is stored, wherein in the association at least one moment of inertia (53) is associated with each deflection or each of a plurality of states of the wind turbine (100), wherein the association is previously ascertained in particular by means of a simulation or by test series and is stored in a memory.

10. A method as claimed in one of the preceding claims wherein a maximum acceleration value is established and the acceleration of the rotor blade (108) is effected in such a way that the maximum acceleration value is not exceeded independently of the ascertained moment of inertia (53).

11. A method as claimed in one of the preceding claims wherein the command for adjustment of precisely three rotor blades (108) of a wind turbine (100) is received and a threshold value for limitation of the accelerations for each of the rotor blades (108) is respectively identical as the result of division of a product from a presetting of a predefined maximum power and a level of efficiency of the pitch motors (20) used for the adjustment by the total of the ascertained moments of inertia (53) for all three rotor blades (108).

12. A method as claimed in one of the preceding claims wherein an extreme load avoidance function is activated by a wind turbine control (26) prior to reception of the command (32) for adjustment of at least one rotor blade (108).

13. A system adapted to carry out the method as claimed in one of the preceding claims and that comprises means for:
- receiving a command (24) for adjustment of the rotor blade (108) at an adjusting speed (28),
- ascertaining a current moment of inertia (53) of the rotor blade (108), and
- accelerating the rotor blade (108) until reaching the adjustment speed (28), wherein the acceleration until reaching the adjustment speed (28) is limited in dependence on the ascertained moment of inertia (53).

14. A wind turbine (100) comprising a system as claimed in claim 13 and at least one rotor blade (108) and a control means (16), wherein the wind turbine (100) has a power supply (12) for supplying at least one pitch drive (20) of the rotor blade (108) and the control means is in particular adapted to determine the acceleration in such a way that a maximum power which is predefined or can be provided by the power supply is not exceeded.

## Revendications

1. Procédé pour le réglage d'au moins une pale de rotor (108) d'une éolienne (100) comprenant les étapes :
- de réception d'une instruction (24) pour le réglage de la pale de rotor (108) à une vitesse de réglage (28),
- de détermination d'un moment d'inertie (53) actuel de la pale de rotor (108),
- d'accélération de la pale de rotor (108) jusqu'à l'atteinte de la vitesse de réglage (28), dans lequel l'accélération jusqu'à l'atteinte de la vitesse de réglage (28) est limitée en fonction du moment d'inertie (53) déterminé.

2. Procédé selon la revendication 1, dans lequel une déviation (29) actuelle de la pale de rotor (108) est établie et le moment d'inertie (53) actuel est déterminé en fonction de la déviation actuelle (29) établie de la pale de rotor (108).

3. Procédé selon la revendication 1 ou 2, dans lequel une vitesse de vent (33) actuelle est établie et la déviation (29) actuelle et/ou le moment d'inertie (53) actuel de la pale de rotor (108) est établi(e) en fonction de la vitesse de vent (33) établie.

4. Procédé selon l'une quelconque des revendications précédentes, dans lequel la vitesse de vent (33) actuelle est établie du fait qu'une vitesse de vent (32) est mesurée, en particulier avec un anémomètre (34) ou un système lidar ou une moyenne de vitesse de vent déterminée en continu, en particulier une moyenne de 3 secondes ou une moyenne de 10 secondes (47), est interrogée.

5. Procédé selon l'une quelconque des revendications précédentes, dans lequel le moment d'inertie (53) actuel ou la déviation (29) est établi(e) en fonction d'un angle de calage (51) actuel de la pale de rotor (108) et/ou d'une vitesse de rotation (49) actuelle d'un rotor, dont la pale de rotor (108) fait partie et/ou d'une puissance électrique actuelle du générateur d'éolienne de l'éolienne, auquel la pale de rotor (108) est associée.

6. Procédé selon l'une quelconque des revendications précédentes, dans lequel la déviation (29) actuelle de la pale de rotor (108) est établie avec des capteurs, en particulier des jauges de contrainte (30) ou un système de capteur optique, tel qu'un système de capteur laser ou un système de caméra, sur la pale de rotor (108).

7. Procédé selon l'une quelconque des revendications précédentes, dans lequel l'instruction (24) pour le réglage d'au moins deux pales de rotor (108) est reçue, après cela une première pale de rotor (108) de deux pales de rotor (108) est accélérée et après écoulement d'une durée prédéfinie, qui est de préférence inférieure à 250 millisecondes ou inférieure à 100 millisecondes, ou après la survenue d'un événement prédéfini une deuxième pale de rotor (108) des deux pales de rotor (108) est accélérée.

8. Procédé selon l'une quelconque des revendications précédentes, dans lequel l'instruction pour le réglage d'au moins deux pales de rotor (108) est reçue et un premier moment d'inertie (53) actuel pour une première pale de rotor (108) de deux pales de rotor (108) et un deuxième moment d'inertie (53) actuel pour une deuxième pale de rotor (108) des deux pales de rotor (108) est établi et l'accélération de la première pale de rotor (108) jusqu'à l'atteinte de la vitesse de réglage (28) est limitée en fonction du premier moment d'inertie (53) établi et l'accélération de la deuxième pale de rotor (108) jusqu'à l'atteinte de la vitesse de réglage (28) est limitée en fonction du deuxième moment d'inertie (53) établi.

9. Procédé selon l'une quelconque des revendications précédentes, dans lequel pour l'établissement du moment d'inertie (53), une affectation, en particulier en tant que tableau ou diagramme, est mise en mémoire, dans lequel dans l'affectation au moins un moment d'inertie (53) est affecté à chaque déviation ou à chacun de plusieurs états de l'éolienne (100), dans lequel l'affectation est préalablement établie en particulier sur la base d'une simulation ou par des séries d'essais et mise en mémoire dans une mémoire.

10. Procédé selon l'une quelconque des revendications précédentes, dans lequel une valeur d'accélération maximale est fixée et l'accélération de la pale de rotor (108) s'effectue de telle sorte qu'indépendamment du moment d'inertie (53) établi la valeur d'accélération maximale n'est pas dépassée.

11. Procédé selon l'une quelconque des revendications précédentes, dans lequel l'instruction de réglage d'exactement trois pales de rotor (108) d'une éolienne (100) est reçue et il en résulte une valeur de seuil pour la limitation des accélérations pour chacune des pales de rotor (108) respectivement identique, en tant que résultat d'une division d'un produit d'une prescription d'une puissance maximale prédéfinie et d'un rendement, des moteurs pas-à-pas (20) utilisés pour le réglage, par la somme des moments d'inertie (53) établis pour l'ensemble des trois pales de rotor (108).

12. Procédé selon l'une quelconque des revendications précédentes, dans lequel avant la réception de l'instruction (32) pour le réglage d'au moins une pale de rotor (108) une fonction anti-charge extrême est activée par une commande d'éolienne (26).

13. Système, qui est conçu pour mettre en œuvre le procédé selon l'une quelconque des revendications précédentes et présente le moyen pour :
- la réception d'une instruction (24) pour le réglage de la pale de rotor (108) à une vitesse de réglage (28),
- l'établissement d'un moment d'inertie (53) actuel de la pale de rotor (108), et
- l'accélération de la pale de rotor (108) jusqu'à l'atteinte de la vitesse de réglage (28), dans lequel l'accélération jusqu'à l'atteinte de la vitesse de réglage (28) est limitée en fonction du moment d'inertie (53) établi.

14. Eolienne (100) avec un système selon la revendication 13 et au moins une pale de rotor (108) et une commande (16), dans laquelle l'éolienne (100) présente une alimentation en énergie (12) pour l'alimentation d'au moins un entraînement de pas (20) de la pale de rotor (108) et la commande est en particulier adaptée pour déterminer l'accélération de telle sorte qu'une puissance maximale pouvant être fournie par l'alimentation en énergie (12) ou prédéfinie n'est pas dépassée.
